# EUROPEAN PATENT SPECIFICATION

(11) **EP 3 963 253 B1**
(45) Date of publication and mention of the grant of the patent: **15.11.2023**
(21) Application number: 20719462.2
(22) Date of filing: 22.04.2020
(51) Int. Cl.: F21K 9/61, F21S 8/02, F21V 7/04, F21V 8/00, F21Y 115/10

(54) **A LIGHT EMITTING DEVICE**
LICHTEMITTIERENDE VORRICHTUNG
DISPOSITIF ÉMETTEUR DE LUMIÈRE

(30) Priority: 29.04.2019 EP 19171491
(43) Date of publication of application: 09.03.2022
(73) Proprietor: Signify Holding B.V., 5656 AE Eindhoven (NL)
(72) Inventor: VISSENBERG, Michel, Cornelis, Josephus, Marie, 5656 AE Eindhoven (NL); ANSEMS, Johannes, Petrus, Maria, 5656 AE Eindhoven (NL); MOS, Barry, 5656 AE Eindhoven (NL); CORNELISSEN, Hugo, Johan, 5656 AE Eindhoven (NL); VDOVIN, Olexandr, Valentynovych, 5656 AE Eindhoven (NL)
(74) Representative: Verweij, Petronella Daniëlle
(86) International application number: PCT/EP2020/061223
(87) International publication number: WO 2020/221641

(56) References cited:
- EP-A1- 2 161 600
- EP-A2- 1 992 870
- WO-A1-2016/179699
- CN-A- 104 421 770
- CN-A- 106 842 411
- US-A1- 2017 184 773

## Description

### FIELD OF THE INVENTION

The invention relates to edge lit light emitting devices. In particular, the invention relates to a light emitting device comprising at least one light source adapted for, in operation, emitting light, the at least one light source comprising a light emitting surface, and a light guide comprising a top surface, a bottom surface and a light incoupling edge extending between the top surface and the bottom surface, where a plane is defined as extending in parallel with the top surface and the bottom surface of the light guide, and where the at least one light source and the light guide being arranged in such a way with respect to each other that the light emitting surface of the at least one light source and the light incoupling edge of the light guide face each other.

### BACKGROUND OF THE INVENTION

The edge-lit light guide architecture is commonly used in various forms of general lighting, such as for example recessed, surface mounted, and suspended luminaires. This architecture enables a very slim luminaire design, which is particularly suited for suspended luminaires with both direct and indirect lighting. The LED light sources are placed at the edge of the guide, where the light is coupled in. By means of extraction features on the guide, the light is coupled out.

Further advantages of this architecture are the uniform appearance of the light source, which is comfortable and aesthetically pleasing, and the low height of the luminaire, which allows for efficient logistic and elegant suspended luminaire designs.

To reduce the cost and weight of the light guide panel, and to reduce the luminaire thickness, the trend is to use thinner light guides. Typically, 6 mm light guides are not un-common in luminaires, while currently the trend is to use 4 or 3 mm thick light guides. The thickness of the light guide used is limited by the size of the LEDs. The edge of the light guide should be at least the size of the LED, to allow incoupling of the light. The size of the LED can also not be arbitrarily small, because the efficacy goes down rapidly in very tiny LED packages.

In general lighting, the mainstream LEDs used are mid-power LEDs that are typically 3x3 mm or larger (e.g. 3x5 mm or 5x7 mm). Smaller LED packages do exist, but these are either too expensive (e.g. high power LEDs) or not efficient enough (e.g. smaller mid-power packages or highly asymmetric packages like 1.5x3 mm) or they do not contain sufficient flux (e.g., two lines of low power LEDs do not produce enough flux for an edge-lit general lighting luminaire).

To reduce cost and weight of light guide based luminaires, and to reduce the luminaire thickness, it would be preferred to use light guides that are thinner than the smallest width of the LED light source.

An example of such a light emitting device is disclosed in EP 2 161 600 A1, where the light incoupling edges of the light guide are slanted, for instance by 45 degrees.

The slanted incoupling edge provides a larger incoupling surface than the straight edge, for instance by a factor of the square root of 2 for a 45-degree slant, to accommodate incoupling LEDs with a larger width than the light guide thickness.

However, with such a light emitting device, a part of the light emitted by the light source, for instance a fraction of 1 - 1/√2 in the above-mentioned case of a 45-degree slant, cannot be coupled into the light guide. This fraction of the light is coupled out, mainly at the side of the light guide facing the slanted incoupling facet, and in an area close to the incoupling edge.

Also, for light emitting devices of the type disclosed in EP 2 161 600 A1, the ratio of upward flux and downward flux is a given constant.

Therefore, there is a desire to provide for a light emitting device with a light guide that is thinner than the smallest width of the LED light source, that also enables controlled light leakage, such that the leaked light can be used effectively, and that enables configuration of the ratio between light coupled out of the light guide in an upward and downward direction, respectively.

WO 2016/179699 A1 discloses a light emitting device comprising a light source and a light guide. The light source is arranged at a slanted angle relative to an incoupling surface of the light guide. A reflector redirects light that is not coupled into the light guide in a direction towards the light guide.

### SUMMARY OF THE INVENTION

It is an object of the present invention to overcome this problem, and to provide a light emitting device with a light guide that is thinner than the smallest width of the LED light source, and that also enables controlled light leakage, such that the leaked light can be used effectively, and such that configuration of the ratio between light coupled out of the light guide in an upward direction and a downward direction, respectively, is enabled.

A further object of the present invention is to provide a light emitting device having a reduced cost and weight as well as a reduced thickness.

According to a first aspect of the invention, this and other objects are achieved by means of a light emitting device comprising at least one light source adapted for, in operation, emitting light, the at least one light source comprising a light emitting surface, and a light guide comprising a top surface, a bottom surface and a light incoupling edge extending between the top surface and the bottom surface, a plane being defined as extending in parallel with at least one of the top surface and the bottom surface of the light guide, the at least one light source and the light guide being arranged in such a way with respect to each other that the light emitting surface of the at least one light source and the light incoupling edge of the light guide face each other, that the light incoupling edge of the light guide extends in a first angle, α, with respect to said plane, that the light emitting surface of the at least one light source extends in a second angle, β, with respect to said plane, and that at least one of the first angle, α, and the second angle, β, is less than 90°, and the light emitting device further comprising a linear refractive and/or reflective optical element arranged and adapted for shaping the fraction of the light emitted by the light source which is not coupled into the light guide and/or which leaks out of the top surface of the light guide into a focused light beam propagating above the top surface away from the light guide in an acute angle with said plane.

It is noted that as used herein in connection with a refractive and/or reflective optical element, the term "linear" is intended to mean that the linear optical element in question is defined by its cross-section in such a way that the shape of the optical element does not change in the direction perpendicular to the said cross-section (i.e. along the line of light sources). Linearity of the optical element is important, because the position of a light source along the said direction is not defined. Such optical elements may be made through an extrusion process, but it can also be made through injection molding, or, for linear reflectors, plate bending. The production process, however, is not essential for the above definition of linearity, although extrusion is interesting because of the low costs associated therewith.

By providing that the light incoupling edge of the light guide extends in a first angle, α, with respect to the plane of the light guide, and that the light emitting surface of the at least one light source extends in a second angle, β, with respect to the plane of the light guide, a light emitting device is provided with which the ratio between light coupled out of the light guide in an upward and downward direction, respectively, may be configured as desired by choosing appropriate values for the first and second angles.

By furthermore providing for that the light emitting device comprises a linear refractive and/or reflective optical element arranged and adapted for shaping the fraction of the light emitted by the light source which cannot be coupled into the light guide, a light emitting device with which this fraction of the light can be used for indirect lighting, or to illuminate a reflective surface at a small distance from the light guide, is provided for. Thereby a fraction of light that would otherwise simply be lost is put to use in a simple and effective manner.

Thus, a light emitting device is hereby provided with which a light guide that is thinner than the smallest width of the LED light source may be used without compromising the light output if the light emitting device by losing light. Furthermore, such a light emitting device also enables controlled light leakage, such that the leaked light can be used effectively.

Also, such a light emitting device has a reduced cost and weight and thickness due to the possibility of using thinner light guides than otherwise possible.

Examples of linear refractive and/or reflective optical elements arranged and adapted for shaping the fraction of the light emitted by the light source which is not coupled into the light guide and/or which leaks out of the top surface of the light guide include a refractive lens, a prism, a TIR element and a reflector.

In practice about 33 % of the light entering the light guide will eventually leak out of the top surface of the light guide. By providing a linear refractive and/or reflective optical element as described above, a light emitting device is provided with which these 33 % of the light may be controlled and effectively be put to use by focusing it into a beam that is lightly tilted with respect to the plane of the light guide. Such a light emitting device thus provides both a direct and an indirect light output.

In an embodiment, the thickness, t of the light guide is smaller than the width, w, of the light emitting surface of the light source.

As also mentioned above, such a light emitting device has the advantage of a reduced production cost and a reduced weight and a reduced thickness due to the use of a thinner and thus smaller and lighter light guide than otherwise possible.

For instance, the thickness, t, of the light guide may be 2.2 mm, or even 2 mm, and wherein the width, w, of the light emitting surface of the light source may be 3 mm.

In an embodiment, the first angle, α is equal to 90°.

This provides for a light emitting device having a light guide of a particularly simple structure, thus keeping the costs even further down.

In an embodiment, the light emitting device further comprises optical elements or dots arranged and adapted for coupling light out of the light guide in a direction towards the bottom surface.

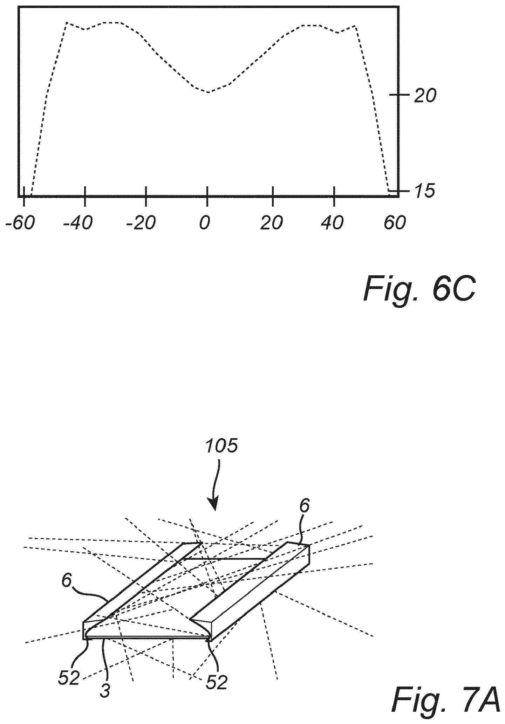

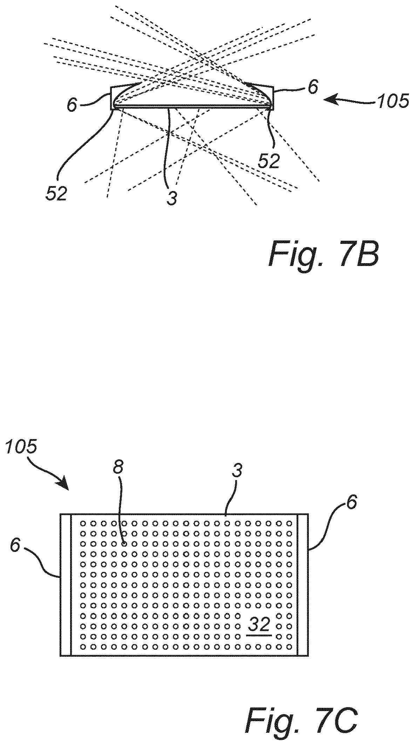

Thereby, a light emitting device is provided with which the light coupled out of the light guide in a downward direction and used for direct illumination may be provided with a Lambertian distribution. Depending on the optical elements provided, other beam shapes are also achievable. Examples of such optical elements are given further below in connection with Figs. 7A-E.

In an embodiment, the light emitting device comprises a reflector, a diffuse reflector, a reflective optical element or a retro-reflective optical element arranged and adapted for redirecting at least a part of the fraction of the light emitted by the light source and coupled out of the light guide though the top surface of the light guide in a direction back towards the light source.

Thereby, a light emitting device is provided with which further possibilities for configuring the ratio between light coupled out of the light guide in an upward and downward direction, respectively, is provided. In particular, a retro-reflective optical element has the additional advantage of avoiding unwanted leakage through the bottom surface of light guide altogether.

In an embodiment, the light emitting device further comprises a reflective plate element arranged at the top side of the light guide and adapted for redirecting the fraction of the light emitted by the light source and coupled out of the light guide though the top surface of the light guide in a downward direction.

Thereby, a light emitting device is provided with which simple Lambertian diffuse reflection in a downward direction may be obtained. Depending on the required shape of the downward beam and the optional beam shaping plate, such a reflective plate element may also be specular, patch-wise specular and diffuse, or glossy.

To enable configuring the ratio between light coupled out of the light guide in an upward and downward direction, respectively, the reflective plate element may also be partly transmissive, examples including a volume diffuser or a metallic reflector with perforated holes.

In an embodiment, the light emitting device further comprises light outcoupling elements arranged at or in the top surface of the light guide at or adjacent to the light incoupling edge of the light guide.

Thereby, a light emitting device is provided with which further possibilities for configuring the ratio between light coupled out of the light guide in an upward and downward direction, respectively, is provided for.

In an embodiment, at least the light emitting surface of the at least one light source is slanting with respect to said plane.

Thereby, a light emitting device is provided with which a larger incoupling surface than for an incoupling edge arranged in a right angle with the plane of the light guide is obtained. For instance, for a slant of 45°, the area of the light incoupling edge is increased by a factor of the square root of 2. Thereby it becomes possible to accommodate light sources with a light emitting surface having with a larger width, w, than the light guide thickness, t.

In an embodiment, both the light emitting surface of the at least one light source and the light incoupling edge of the light guide face is slanting with respect to said plane.

Thereby, a light emitting device with a simple construction and which is simpler to assemble is provided for.

In an embodiment, the first angle, α, is different from the second angle, β.

Thereby, a light emitting device is provided with which it becomes possible to obtain an upward directed light output with the desired broad, wide-angle distribution while simultaneously obtaining a downward directed light output with a reduced flux compared to when the first and second angles are chosen to be identical.

In an embodiment, the first angle, α, lies in the interval of 90° ≥ α ≥ 0°. In another embodiment, the first angle, α, lies in the interval of 90° ≥ α ≥ 45°.

For instance, if the first angle is chosen to be 45°, it becomes possible to use a light source with a light emitting surface having a width, w, of 3 mm and a light guide having a thickness, t, of only 2 mm.

In an embodiment, the second angle, β, lies in the interval of 90° > β ≥ 0°. In another embodiment, the second angle, β, lies in the interval of 90° > β ≥ 45°.

The inventors have proven by way of simulation that if choosing the first and second angle, such that they each lie in the above indicated intervals, it becomes possible to obtain an upward directed light output with the desired broad, wide-angle distribution while simultaneously obtaining a downward directed light output with a suitably high flux for common practical applications. Furthermore, the simulations show that the ratio between light coupled out of the light guide in an upward and downward direction, respectively, can be configured by choosing the light guide incoupling edge angle, i.e. the first angle, α, while keeping the LED light emitting surface angle, i.e. the second angle, β, constant. Analogously, when keeping the light guide incoupling edge angle, α, constant, the ratio between light coupled out of the light guide in an upward and downward direction, respectively, can be configured by choosing the LED light emitting surface angle, β. Exemplary simulations are shown in the Figures and will be described further below.

In an embodiment, the at least one light source is mounted on the light incoupling edge of the light guide by means of a mechanical holding device in such a way that an air gap is formed between the light source and the light guide.

In an embodiment, the at least one light source is mounted on the light incoupling edge of the light guide by means of an optically transparent soldering.

In an alternative embodiment, the at least one light source is mounted on the light incoupling edge of the light guide by means of an optically transparent glue.

In an embodiment being alternative or additional to the two above embodiments, the at least one light source is mounted on the light incoupling edge of the light guide by means of a mechanical holding device.

Thereby, a light emitting device is provided with which it becomes possible to mount the light source with the light emitting surface in any desired first angle with the plane of the light guide in a particularly simple and straight forward manner irrespective of the size of the second angle.

A mechanical holding device has the further advantage of providing for a light emitting device with a particularly robust and stable structure, especially when combined with an optically transparent soldering or glue.

The invention furthermore, in a second aspect, concerns a lamp, a luminaire, or a lighting fixture, comprising a light emitting device according to the invention. Non-limiting examples of such lamps, luminaires and lighting fixtures are direct-indirect lighting luminaires, particularly suspended luminaires, for indoor or outdoor workspaces.

### BRIEF DESCRIPTION OF THE DRAWINGS

This and other aspects of the present invention will now be described in more detail, with reference to the appended drawings showing embodiment(s) of the invention.
Fig. 1 shows a cross-sectional side view of a first embodiment of a light emitting device according to the invention.
Fig. 2 shows a cross-sectional side view of a second embodiment of a light emitting device according to the invention.
Fig. 3 shows a cross-sectional side view of a section of a third embodiment of a light emitting device according to the invention.
Fig. 4 shows a cross-sectional side view of a section of a fourth embodiment of a light emitting device according to the invention.
Fig. 5 shows a cross-sectional side view of a section of a fifth embodiment of a light emitting device according to the invention.
Fig. 6A shows a perspective view of a sixth embodiment of a light emitting device according to the invention.
Figs. 6B and 6C shows a diagram illustrating the light intensity and of the illuminance, respectively, of a light emitting device according to Fig. 6A. In Fig. 6B the radial axis denotes Candela of the light output as a function of angle of view, while in Fig. 6C the horizontal axis indicates the location at the light guide, and the vertical axis is the emitted light at that location.
Figs. 7A-C shows a perspective view, a cross-sectional side view and a bottom view, respectively, of a seventh embodiment of a light emitting device according to the invention.
Figs. 7D and 7E shows a diagram illustrating the light intensity and of the illuminance, respectively, of a light emitting device according to Figs. 7A-C. In Fig. 7D the radial axis denoted Candela of the light output as a function of angle of view, while in Fig. 7E the horizontal axis indicates the location at the light guide, and the vertical axis is the emitted light at that location.
Figs. 8A and 8B shows an enlarged section and a cross-sectional side view, respectively, of an eighth embodiment of a light emitting device according to the invention.
Figs. 8C and 8D shows a diagram illustrating the light intensity and of the illuminance, respectively, of a light emitting device according to Figs. 8A and 8B. In Fig. 8C the radial axis denoted Candela of the light output as a function of angle of view, while in Fig. 8D the horizontal axis indicates the location at the light guide, and the vertical axis is the emitted light at that location.
Figs. 9A and 9B shows an enlarged section and a cross-sectional side view, respectively, of a ninth embodiment of a light emitting device according to the invention.
Figs. 9C and 9D shows a diagram illustrating the light intensity and of the illuminance, respectively, of a light emitting device according to Figs. 9A and 9B. In Fig. 9C the radial axis denoted Candela of the light output as a function of angle of view, while in Fig. 9D the horizontal axis indicates the location at the light guide, and the vertical axis is the emitted light at that location.

As illustrated in the figures, the sizes of layers and regions are exaggerated for illustrative purposes and, thus, are provided to illustrate the general structures of embodiments of the present invention. Like reference numerals refer to like elements throughout.

### DETAILED DESCRIPTION

The present invention will now be described more fully hereinafter with reference to the accompanying drawings, in which currently preferred embodiments of the invention are shown. This invention may, however, be embodied in many different forms and should not be construed as limited to the embodiments set forth herein; rather, these embodiments are provided for thoroughness and completeness, and fully convey the scope of the invention to the skilled person.

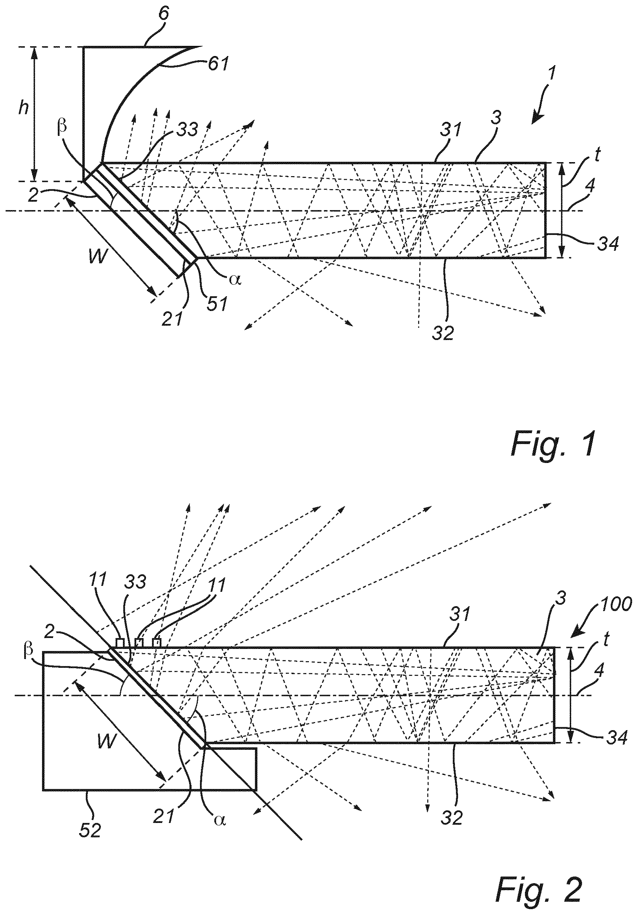

Fig. 1 shows a cross-sectional side view of a first embodiment of a light emitting device 1 according to the invention.

Generally, and irrespective of the embodiment, the light emitting device 1 according to the invention comprises a light source 2 and a light guide 3.

The light source 2 comprises a light emitting surface 21. The light source 2 is adapted for, in operation, emitting light. The light emitted by the light source may be white light, although light of any other color is also feasible. In the embodiments shown in the drawings, one light source 2 is shown. However, it is also feasible that the light emitting device may comprise more than one, e.g. two or three, light sources 2. The light source 2 is typically a LED.

The light guide 3 comprises a top surface 31, a bottom surface 32 and a light incoupling edge 33 extending between the top surface 31 and the bottom surface 32. The light guide 3 further comprises an end surface 34 opposite the light incoupling edge 33 and extending between the top surface 31 and the bottom surface 32. Furthermore, a plane 4 is defined as extending in parallel with at least one of the top surface 31 and the bottom surface 32 of the light guide 3. The plane 4 may be described as a longitudinal or longitudinally extending plane of the light guide 3. Also, the plane 4 typically, but not necessarily, extends perpendicular to the end surface 34.

Still generally, and irrespective of the embodiment, the light source 2 and the light guide 3 are arranged such that the light emitting surface 21 of the light source 2 and the light incoupling edge 33 of the light guide 3 face each other. Thus, the light emitting device according to the invention is an edge lit light emitting device.

The light incoupling edge 33 of the light guide 3 extends in a first angle, α, with respect to the plane 4, and the light emitting surface 21 of the light source 2 extends in a second angle, β with respect to the plane 4. As may be seen from Fig. 1, both the light emitting surface 21 of the light source 2 and the light incoupling edge 33 of the light guide 3 is slanting with respect to the plane 4.

Furthermore, in the embodiment shown in Fig. 1, the first angle α and the second angle β is the same. By way of non-limiting examples, the first angle α may lie in the interval of 90° ≥ α ≥ 0°, or in the interval of 90° ≥ α ≥ 45°. For instance, the first angle α may be 10°, 30°, 45°, 60°, 80° or 90°. Likewise, by way of non-limiting examples, the second angle β may lie in the interval of 90° > β ≥ 0°, or in the interval of 90° > β ≥ 45°. For instance, the second angle β may be 10°, 30°, 45°, 60°, 80° or 90°.

The light guide 3 comprises a thickness t. The light emitting surface 21 of the light source 2 comprises a width w. Typically, for a light emitting device according to any embodiment of the invention, the thickness t of the light guide 3 is smaller than the width w of the light emitting surface 21 of the light source 2. By way of a non-limiting example, the thickness t of the light guide 3 may be 2.2 mm, and the width w of the light emitting surface 21 of the light source 2 may be 3 mm.

Still generally, and irrespective of the embodiment, the light emitting device 1 further comprises an optical element 6 adapted for shaping the fraction of the light emitted by the light source 2 which cannot be coupled into the light guide 3 and/or which leaks through the top surface 31 of the light guide 3. This fraction of the light amounts to about 33 % of the total amount of light emitted by the light source 2. The optical element 6 is a linear refractive optical element. Alternatively, or additionally, the optical element 6 is a linear reflective optical element. By way of examples, the optical element 6 may be a refractive lens, a prism, a TIR element or a reflector. The optical element 6 comprises a surface 61 which extends over a part of the top surface 31 of the light guide. The surface 61 may be a curved surface curving in a way suitable to reflect or refract light in a desired manner. The optical element 6 has a height h, the size of which is chosen to enable forming the surface 61 in such a manner as to obtain a desired light output. In a non-limiting example, the height h may for instance be 20 mm.

The light source 2 of the light emitting device 1 is mounted on the light incoupling edge 33 of the light guide 3 by means of an optically transparent soldering or an optically transparent glue 51.

Fig. 2 shows a cross-sectional side view of a second embodiment of a light emitting device 100 according to the invention. The optical element 6 is not shown in Fig. 2 for the sake of simplicity. The light emitting device 100 differs from that of Fig. 1 described above in that the light source 2 of the light emitting device 100 is mounted on the light incoupling edge 33 of the light guide 3 by means of a mechanical holding device 52. The mechanical holding device 52 is adapted for holding the light source 2 such that the light emitting surface 21 and the light incoupling edge 33 are abutting one another, and thus are in direct contact. In principle, the mechanical holding device 52 may also be adapted for holding the light source 2 such that the light emitting surface 21 and the light incoupling edge 33 are in indirect contact, e.g. such that a small gap is present between the light emitting surface 21 and the light incoupling edge 33.

Furthermore, the light emitting device 100 comprises light outcoupling elements 11 or structures arranged at the top surface 31 of the light guide 3 adjacent to the light incoupling edge 33 of the light guide 3.

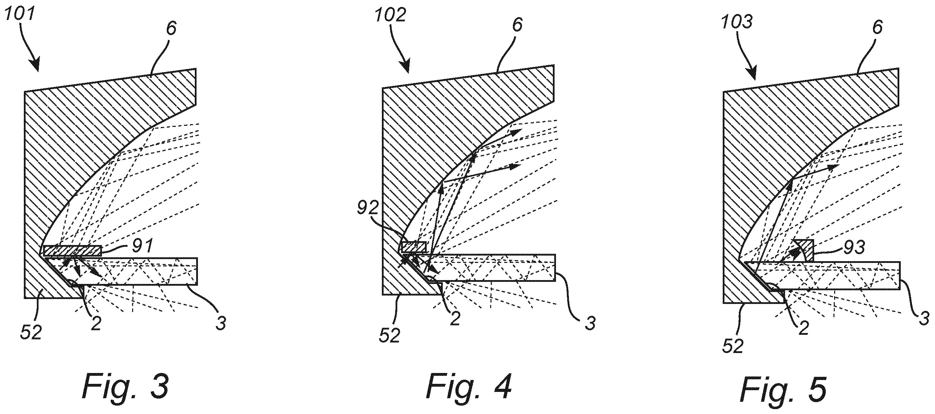

Figs. 3-5 show cross-sectional side views of a third, fourth and fifth embodiment, respectively, of a light emitting device 101, 102, 103 according to the invention. The light emitting devices 101, 102 and 103 each differ from those of Figs. 1 and 2 described above in virtue of the following features.

The mechanical holding device 52 and the optical element 6 are provided in one piece, thus providing for a simpler and more robust structure of the light emitting device 101, 102, 103.

Furthermore, the light emitting devices 101, 102 and 103 each comprise a reflector 91, 92 and 93, respectively. The reflectors 91, 92, 93 are provided to block at least a part of the light leaking out of the light guide 3 through the top surface 31 and redirecting the blocked light back towards the light source 2. The reflector 91 of the light emitting device 101 shown in Fig. 3 is a diffuse reflector dimensioned to completely block the light leaking out of the light guide 3 through the top surface 31. The reflector 92 of the light emitting device 102 shown in Fig. 4 is a diffuse reflector dimensioned to block a part of the light leaking out of the light guide 3 through the top surface 31. The reflector 93 of the light emitting device 103 shown in Fig. 5 is a retro-reflector element shaped and dimensioned to send a part of the light leaking out of the light guide 3 through the top surface 31 back towards the light source 2 in such a way that no leakage through the bottom surface 32 of the light guide 3 occurs.

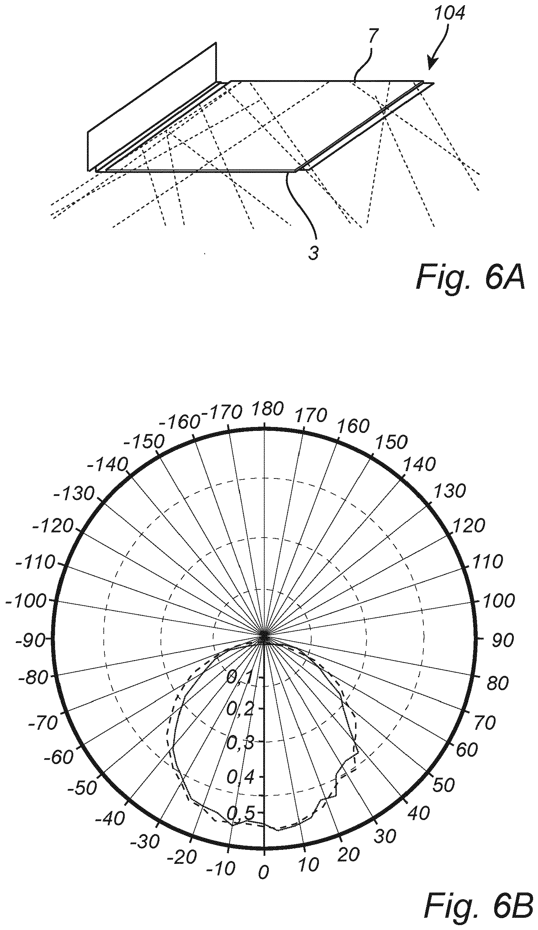

Fig. 6A shows a perspective view of a sixth embodiment of a light emitting device 104 according to the invention. The light emitting device 104 differs from those of Figs. 1-5 described above in virtue of the following features.

As an alternative to an optical element 6, the light emitting device 104 comprises a reflective element or plate 7 arranged at the top surface 31 of the light guide 3. The reflective plate 7 provides for simple Lambertian diffuse reflection of the light not being coupled into the light guide 3 as well as the light leaking out through the top surface 31 of the light guide. Thereby, a downward directed beam of light is obtained, while no light is directed upwards. Depending on the required shape of the downward beam and an optional beam shaping plate, the reflective element or plate 7 may also be specular, patchwise specular and diffuse, or glossy. To provide also an upward directed beam of light, and further to allow for configuring the ration between the downward directed beam and the upward directed beam, the reflective element or plate 7 may also be partly transmissive. For instance, the reflective element or plate 7 may be a volume diffuser or a metallic reflector with perforated holes).

Fig. 6B shows a diagram illustrating the light intensity distribution of the light emitted by a light emitting device 104 according to Fig. 6A. Fig. 6C shows a diagram illustrating the illuminance of the light emitted by a light emitting device 104 according to Fig. 6A. These illustrations show that a light pattern with a wide intensity distribution of the light emitted in the downward direction may be obtained.

It is noted that the light redirection optics, i.e. the optical elements 6 and/or 7, according to the present invention could be applied to a light guide 3 having a thickness t corresponding to the width w of the light outcoupling surface 21 of the light source 2, but could also be applied to a light guide 3 with a thickness t being smaller than the width w of the light outcoupling surface 21 of the light source 2.

Figs. 7A-C show different views of a seventh embodiment of a light emitting device 105 according to the invention. The light emitting device 105 differs from those of Figs. 1-6 described above in virtue of the following features.

A holder 52 and an optical element 6 is provided at each of the two opposite ends corresponding to the light outcoupling edge 33 and the end surface 34 of the light guide 3. Thus, the light emitting device 105 also comprises two light sources 2, one at each of the two opposite ends corresponding to the light outcoupling edge 33 and the end surface 34 of the light guide 3. However, the two light sources 2 are not shown in Figs. 7A-C for the sake of simplicity. In this case, both the light outcoupling edge 33 and the light emitting surface 21 of the light sources 2 are arranged in an angle of 45° with the plane 4. In other words, both the first angle α and the second angle β are 45°. Similarly, the end surface 34 may also be arranged in an angle of 45° with the plane 4.

Furthermore, as shown on Fig. 7C the light emitting device 105 comprises a pattern of dots 8 arranged on the light guide 3. The pattern of dots 8 are arranged on the bottom surface 32 of the light guide. The pattern of dots 8 provide for outcoupling of light with a Lambertian pattern through the bottom surface 32 of the light guide. The dots 8 of the pattern of dots may be of identical size, such as for instance 1.25 to 1.5 mm in diameter. Alternatively, the dots 8 of the pattern of dots may be of varying size. In the embodiment shown in Fig. 6C, the dots 8 vary in size from 1.5 m in diameter at the center of the pattern to 1.25 mm in diameter at the edge of the pattern.

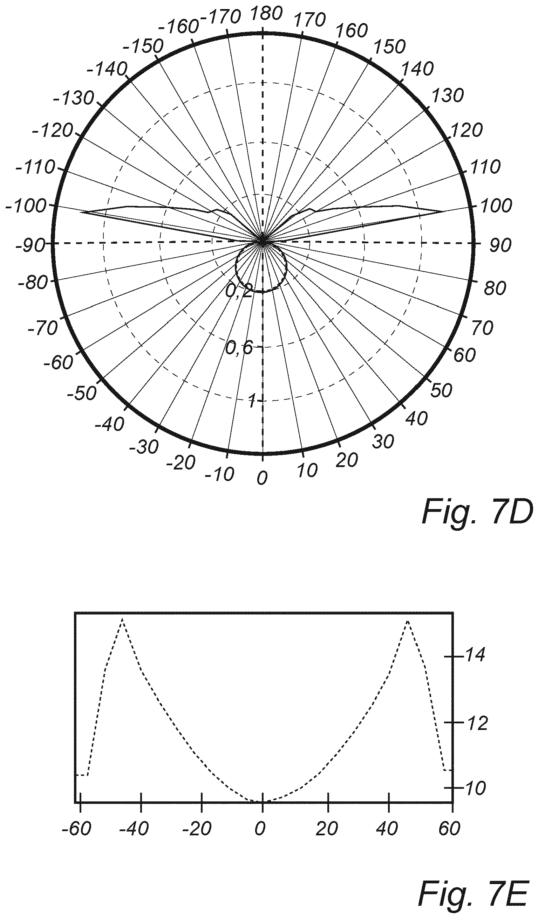

Fig. 7D shows a diagram illustrating the light intensity of the light emitted by a light emitting device 105 according to Figs. 7A-C. Fig. 7E shows a diagram illustrating the illuminance of the light emitted by a light emitting device 105 according to Figs. 7A-C. These illustrations show that a broad, wide-angled light pattern of the light emitted in the upward direction may be obtained, and that the downward flux equals 49 % of the total flux outputted by the light emitting device 105. In more precise figures, the light sources 2 provide an input of 2 lumens, and the light emitting device 105 provides a total output of 1.72 lumens, of which 0.84 lumens are emitted in a downward direction.

In the embodiment of Figs. 7A-E, the indirect lighting component, i.e. the light emitted upwards has an extreme batwing distribution as shown in Fig. 7D. This enables a wide and even ceiling illuminance from a relatively short distance. The direct lighting component, i.e. the light emitted downwards, is Lambertian.

It is noted that generally other beam shapes are also possible, based on solutions known per se, such as light guides with outcoupling features like faceted structures, or controlled surface roughness or paint with specific scattering properties, optionally in combination with beam shaping plates below the light guide, like MLO or redirecting prism plates, or meso-optic foils.

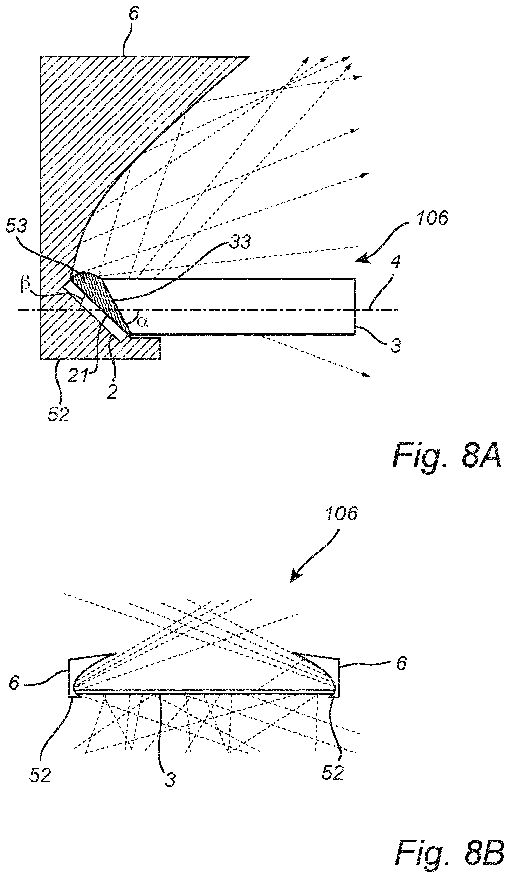

Figs. 8A-B show different views of an eighth embodiment of a light emitting device 106 according to the invention. The light emitting device 106 differs from those of Figs. 1-7 described above in virtue of the following features.

A holder 52 and an optical element 6 is provided at each of the two opposite ends corresponding to the light outcoupling edge 33 and the end surface 34 of the light guide 3. Thus, the light emitting device 106 also comprises two light sources 2, one at each of the two opposite ends corresponding to the light outcoupling edge 33 and the end surface 34 of the light guide 3. However, the two light sources 2 are not shown in Figs. 8A-B for the sake of simplicity.

The light outcoupling edge 33 of the light guide 3 and the light emitting surface 21 of the light sources 2 are arranged in different angles with respect to the plane 4. In other words, the first angle α is different from the second angle β. This is obtained in that, in addition to the holder 52, an air gap is provided between the light source 2 and the light guide 3, particularly between the light emitting surface 21 and the light incoupling edge 33. Optionally, the light source 2 may further be mounted on the light guide 3 by means of an optically transparent soldering or glue 53 arranged in the gap - cf. in particular Fig. 8A. In this way, in the embodiment shown, the first angle α is about 60°, and the second angle β is about 45°. Of course, any set of different first and second angles may be obtained in this manner. Similarly, the end surface 34 may also be arranged in an angle of 60° with the plane 4.

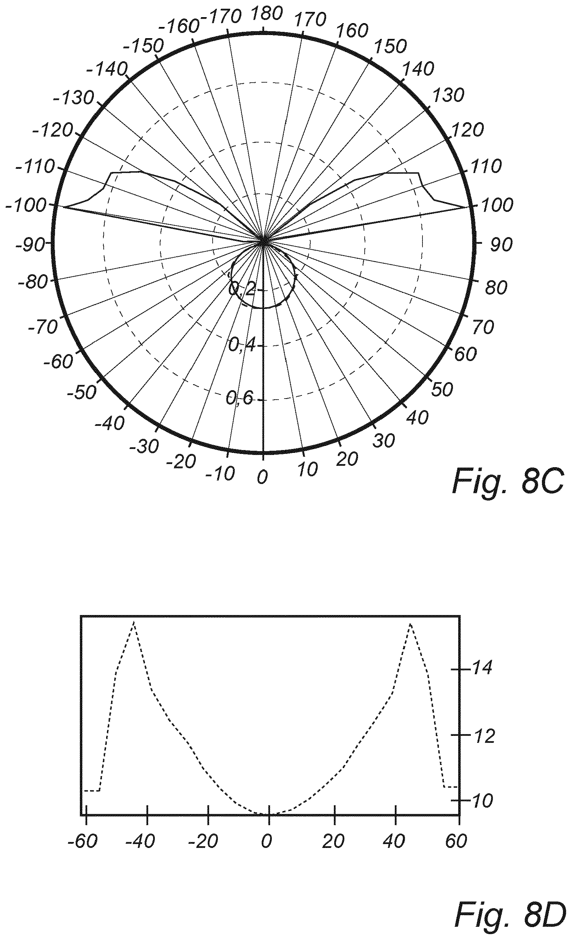

Fig. 8C shows a diagram illustrating the light intensity of the light emitted by a light emitting device 106 according to Figs. 8A-B. Fig. 8D shows a diagram illustrating the illuminance of the light emitted by a light emitting device 106 according to Figs. 8A-B. These illustrations show that a broad, wide-angled light pattern of the light emitted in the upward direction may be obtained, and that the downward flux is reduced to 42 % of the total flux outputted by the light emitting device 106, when compared to the results obtained for the embodiment according to Figs. 7A-E. In more precise figures, the light sources 2 provide an input of 2 lumens, and the light emitting device 106 provides a total output of 1.76 lumens, of which 0.74 lumens are emitted in a downward direction.

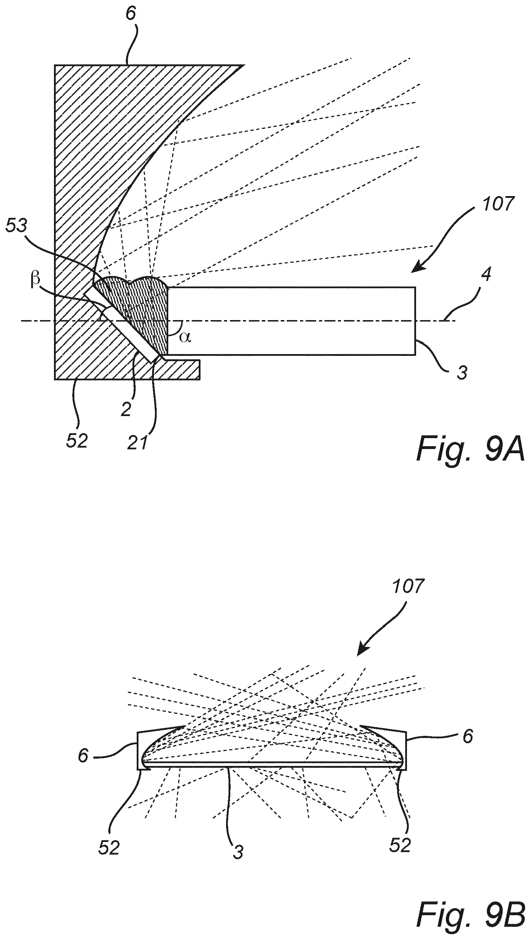

Figs. 9A-B show different views of a ninth embodiment of a light emitting device 107 according to the invention. The light emitting device 107 differs from those of Figs. 1-8 described above in virtue of the following features.

A holder 52 and an optical element 6 is provided at each of the two opposite ends corresponding to the light outcoupling edge 33 and the end surface 34 of the light guide 3. Thus, the light emitting device 107 also comprises two light sources 2, one at each of the two opposite ends corresponding to the light outcoupling edge 33 and the end surface 34 of the light guide 3. However, the two light sources 2 are not shown in Figs. 9A-B for the sake of simplicity.

The light outcoupling edge 33 of the light guide 3 and the light emitting surface 21 of the light source 2 are arranged in different angles with respect to the plane 4. In other words, the first angle α is different from the second angle β. This is obtained in that, in addition to the holder 52 an air gap is provided between the light source 2 and the light guide 3, particularly between the light emitting surface 21 and the light incoupling edge 33. Optionally, the light source 2 may further be mounted on the light guide 3 by means of an optically transparent soldering or glue 53 arranged in the gap - cf. in particular Fig. 9A. In this way, in the embodiment shown, the first angle α is 90°, and the second angle β is about 45°. In this particular embodiment, only the light emitting surface 21 of the light source 2 is thus slanted with respect to the plane 4.

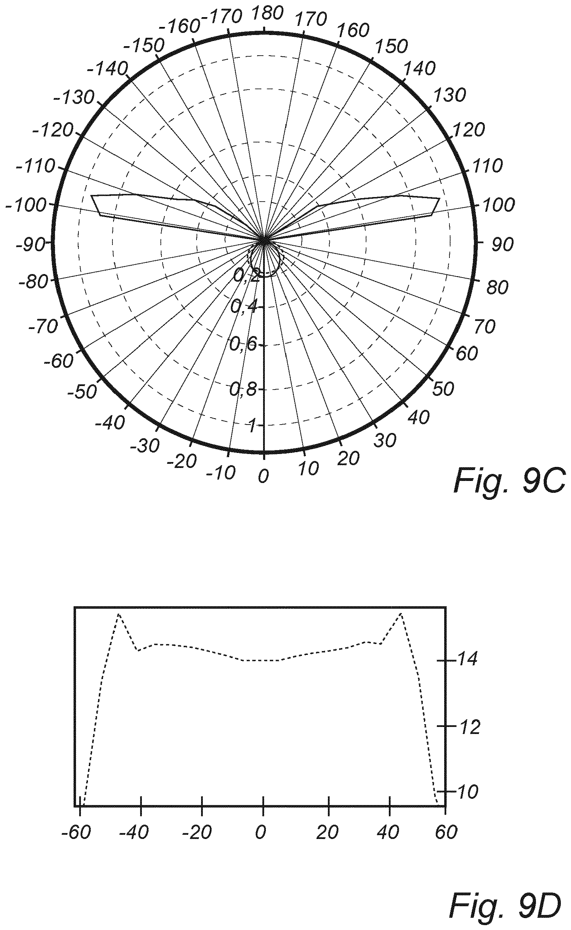

Fig. 9C shows a diagram illustrating the light intensity of the light emitted by a light emitting device 107 according to Figs. 9A-B. Fig. 9D shows a diagram illustrating the illuminance of the light emitted by a light emitting device 107 according to Figs. 9A-B. These illustrations show that a broad, wide-angled light pattern of the light emitted in the upward direction may be obtained, and that the downward flux is reduced to 30 % of the total flux outputted by the light emitting device 107, when compared to the results obtained for the embodiments according to Figs. 7A-E and Figs. 8A-D. In more precise figures, the light sources 2 provide an input of 2 lumens, and the light emitting device 107 provides a total output of 1.77 lumens, of which 0.54 lumens are emitted in a downward direction.

Figs. 7A-9D thus overall illustrate that the ratio between upward emitted light and downward emitted light can be adjusted as desired by adjusting the light guide incoupling edge 33 angle, i.e. the first angle α, while keeping the light source light emitting surface 21 angle, i.e. the second angle β, constant. Thus, increasing the first angle, α, while keeping the second angle, β, constant reduces the downward flux. Analogously, when keeping the light guide incoupling edge 33 angle, i.e. the first angle α, constant, the ratio between upward emitted light and downward emitted light can be adjusted as desired by adjusting the light source light emitting surface 21 angle, i.e. the second angle β.

Thus, the amount of light leakage, and thus the amount of light not coupled into the light guide 3, and therefore the indirect lighting component, may be tuned by choosing a different either first angle or second angle. Alternatively, or additionally the amount of light leakage, and thus the amount of light not coupled into the light guide 3, and therefore the indirect lighting component, may be tuned by increasing the distance between the light source 2 and the light incoupling edge 33 of the light guide 3. However, increasing the said distance may cause a direction of emission of light deviating from the direction of the light that leaks via the light guide. Part of the indirect lighting component may therefore less controlled.

Another way to tune the ratio between upward emitted light and downward emitted light is to add light outcoupling features at or in the top surface 31 of the light guide 3, close to the light outcoupling edge 33 of the light guide 3.

We note that the invention is not limited to rectangular guides with two-sided light injection. For example, a circular light guide with one round slanted facet, or a rectangular light guide with slanted facets on all four sides are also embodiments of the invention.

The person skilled in the art realizes that the present invention by no means is limited to the preferred embodiments described above. On the contrary, many modifications and variations are possible within the scope of the appended claims.

Additionally, variations to the disclosed embodiments can be understood and effected by the skilled person in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage.

## Claims

1. A light emitting device (1) comprising:
a light source (2) adapted for, in operation, emitting light, the light source (2) comprising a light emitting surface (21), and
a light guide (3) comprising a top surface (31), a bottom surface (32) and a light incoupling edge (33) extending between the top surface (31) and the bottom surface (32), wherein
a plane (4) is defined as extending in parallel with at least one of the top surface (31) and the bottom surface (32) of the light guide (3), wherein
the light source (2) and the light guide (3) are arranged in such a way with respect to each other that the light emitting surface (21) of the light source (2) and the light incoupling edge (33) of the light guide (3) face each other, that the light incoupling edge (33) of the light guide (3) extends in a first angle (α) with respect to said plane (4), that the light emitting surface (21) of the light source (2) extends in a second angle (β) with respect to said plane (4), and that at least one of the first angle (α) and the second angle (β) is less than 90°, wherein
the light emitting device (1) further comprises a linear refractive and/or reflective optical element (6) arranged and adapted for shaping the fraction of the light emitted by the light source (2) which is not coupled into the light guide (3) and/or which leaks out of the top surface (31) of the light guide (3),
**characterised in that** the linear refractive and/or reflective optical element (6) is arranged and adapted for shaping said fraction of the light emitted by the light source (2) into a focused light beam propagating above the top surface (31) away from the light guide (3) in an acute angle with said plane (4).

2. A light emitting device (1) according to claim 1, and further comprising a reflective plate element (7) arranged at a top side of the light guide (3) and adapted for redirecting in a downward direction and focusing the fraction of the light emitted by the light source (2) and coupled out of the light guide (2) and/or leaking out of the top surface (31) of the light guide (3) though the top surface (31) of the light guide (3).

3. A light emitting device (1) according to any one of the above claims, wherein the thickness (t) of the light guide (3) is smaller than the width (w) of the light emitting surface (33) of the light source (2).

4. A light emitting device (1) according to claim 3, wherein the first angle (α) is equal to 90°.

5. A light emitting device (1) according to any one of the above claims 3 and 4, wherein the thickness (t) of the light guide (3) is 2.2 mm, and wherein the width (w) of the light emitting surface (21) of the light source (2) is 3 mm.

6. A light emitting device (1) according to any one of the above claims, and further comprising optical elements or dots (8) arranged and adapted for coupling light out of the light guide (3) in a direction towards the bottom surface (32).

7. A light emitting device (1) according to any one of the above claims, and further comprising a reflector, a diffuse reflector (91, 92), a reflective optical element or a retro-reflective optical element (93) arranged and adapted for redirecting at least a part of the fraction of the light emitted by the light source (2) and coupled out of the light guide (3) through the top surface (31) of the light guide (3) in direction back towards the light source (2).

8. A light emitting device (1) according to any one of the above claims, and further comprising light outcoupling elements (11) arranged at or in the top surface (31) of the light guide (3) at or adjacent to the light incoupling edge (33) of the light guide (3).

9. A light emitting device (1) according to any one of the above claims, wherein the light emitting surface (21) of the light source (2) is slanting with respect to said plane (4).

10. A light emitting device (1) according to claim 9, wherein the light incoupling edge (33) of the light guide (3) is slanting with respect to said plane (4).

11. A light emitting device (1) according to any one of the above claims, wherein the first angle (α) is different from the second angle (β).

12. A light emitting device (1) according to any one of the above claims, wherein the first angle (α) lies in the interval of 90° ≥ α ≥ 0°, or in the interval of 90° ≥ α ≥ 45°.

13. A light emitting device (1) according to any one of the above claims, wherein the second angle (β) lies in the interval of 90° > β ≥ 0°, or in the interval of 90° > β ≥ 45°.

14. A light emitting device (1) according to any one of the above claims, wherein the light source (2) is mounted on the light incoupling edge (33) of the light guide (3) by means of any one or more of an optically transparent soldering (51), an optically transparent glue, a mechanical holding device (52), and a mechanical holding device (52) arranged such that an air gap is formed between the light source (2) and the light guide (3).

15. A lamp, a luminaire, or a lighting fixture, comprising a light emitting device (1) according to any one of the above claims.

## Patentansprüche

1. Lichtemittierende Vorrichtung (1), umfassend:
eine Lichtquelle (2), die angepasst ist, um im Betrieb Licht zu emittieren, wobei die Lichtquelle (2) eine lichtemittierende Oberfläche (21) umfasst, und
einen Lichtleiter (3), der eine obere Oberfläche (31), eine untere Oberfläche (32) und eine Lichteinkopplungskante (33) umfasst, die sich zwischen der oberen Oberfläche (31) und der unteren Oberfläche (32) erstreckt, wobei
eine Ebene (4) so definiert ist, dass sie sich parallel zu mindestens einer der oberen Oberfläche (31) und der unteren Oberfläche (32) des Lichtleiters (3) erstreckt, wobei
die Lichtquelle (2) und der Lichtleiter (3) derart in Bezug zueinander angeordnet sind, dass die lichtemittierende Oberfläche (21) der Lichtquelle (2) und die Lichteinkopplungskante (33) des Lichtleiters (3) einander zugewandt sind, dass sich die Lichteinkopplungskante (33) des Lichtleiters (3) in einem ersten Winkel (α) in Bezug auf die Ebene (4) erstreckt, dass sich die lichtemittierende Oberfläche (21) der Lichtquelle (2) in einem zweiten Winkel (β) in Bezug auf die Ebene (4) erstreckt, und dass mindestens einer von dem ersten Winkel (α) und dem zweiten Winkel (β) kleiner als 90° ist, wobei
die lichtemittierende Vorrichtung (1) ferner ein lineares refraktives und/oder reflektierendes optisches Element (6) umfasst, das zum Formen des Anteils des von der Lichtquelle (2) emittierten Lichts, der nicht in den Lichtleiter (3) eingekoppelt wird und/oder der aus der oberen Oberfläche (31) des Lichtleiters (3) austritt, angeordnet und angepasst ist,
**dadurch gekennzeichnet, dass** das lineare refraktive und/oder reflektierende optische Element (6) angeordnet und angepasst ist, um den Anteil des von der Lichtquelle (2) emittierten Lichts in einen fokussierten Lichtstrahl zu formen, der sich oberhalb der oberen Oberfläche (31) weg von dem Lichtleiter (3) in einem spitzen Winkel mit der Ebene (4) ausbreitet.

2. Lichtemittierende Vorrichtung (1) nach Anspruch 1, und ferner umfassend ein reflektierendes Plattenelement (7), das an einer Oberseite des Lichtleiters (3) angeordnet ist und angepasst ist, den Anteil des von der Lichtquelle (2) emittierten und aus dem Lichtleiter (2) ausgekoppelten und/oder aus der oberen Oberfläche (31) des Lichtleiters (3) durch die obere Oberfläche (31) des Lichtleiters (3) austretenden Lichts in eine Richtung nach unten umzulenken und zu fokussieren.

3. Lichtemittierende Vorrichtung (1) nach einem der vorstehenden Ansprüche, wobei die Dicke (t) des Lichtleiters (3) kleiner ist als die Breite (w) der lichtemittierenden Oberfläche (33) der Lichtquelle (2).

4. Lichtemittierende Vorrichtung (1) nach Anspruch 3, wobei der erste Winkel (α) gleich 90° ist.

5. Lichtemittierende Vorrichtung (1) nach einem der vorstehenden Ansprüche 3 und 4, wobei die Dicke (t) des Lichtleiters (3) 2,2 mm beträgt und wobei die Breite (w) der lichtemittierenden Oberfläche (21) der Lichtquelle (2) 3 mm beträgt.

6. Lichtemittierende Vorrichtung (1) nach einem der vorstehenden Ansprüche, die ferner optische Elemente oder Punkte (8) umfasst, die angeordnet und angepasst sind, um Licht aus dem Lichtleiter (3) in einer Richtung zu der unteren Oberfläche (32) hin zu koppeln.

7. Lichtemittierende Vorrichtung (1) nach einem der vorstehenden Ansprüche, ferner umfassend einen Reflektor, einen diffusen Reflektor (91, 92), ein reflektierendes optisches Element oder ein retroreflektierendes optisches Element (93), das angeordnet und angepasst ist, um mindestens einen Teil des Anteils des von der Lichtquelle (2) emittierten und aus dem Lichtleiter (3) ausgekoppelten Lichts durch die obere Oberfläche (31) des Lichtleiters (3) in Richtung zurück zu der Lichtquelle (2) umzulenken.

8. Lichtemittierende Vorrichtung (1) nach einem der vorstehenden Ansprüche, und ferner umfassend Lichtauskopplungselemente (11), die an oder in der oberen Oberfläche (31) des Lichtleiters (3) an oder angrenzend an die Lichteinkopplungskante (33) des Lichtleiters (3) angeordnet sind.

9. Lichtemittierende Vorrichtung (1) nach einem der vorstehenden Ansprüche, wobei die lichtemittierende Oberfläche (21) der Lichtquelle (2) in Bezug auf die Ebene (4) geneigt ist.

10. Lichtemittierende Vorrichtung (1) nach Anspruch 9, wobei die Lichteinkopplungskante (33) des Lichtleiters (3) in Bezug auf die Ebene (4) geneigt ist.

11. Lichtemittierende Vorrichtung (1) nach einem der vorstehenden Ansprüche, wobei sich der erste Winkel (α) von dem zweiten Winkel (β) unterscheidet.

12. Lichtemittierende Vorrichtung (1) nach einem der vorstehenden Ansprüche, wobei der erste Winkel (α) im Intervall von 90° ≥ α ≥ 0° oder im Intervall von 90° ≥ α ≥ 45° liegt.

13. Lichtemittierende Vorrichtung (1) nach einem der vorstehenden Ansprüche, wobei der zweite Winkel (β) im Intervall von 90° > β ≥ 0° oder im Intervall von 90° > β ≥ 45° liegt.

14. Lichtemittierende Vorrichtung (1) nach einem der vorstehenden Ansprüche, wobei die Lichtquelle (2) an der Lichteinkopplungskante (33) des Lichtleiters (3) mittels einer oder mehrerer einer optisch transparenten Lötung (51), eines optisch transparenten Klebers, einer mechanischen Haltevorrichtung (52) und einer mechanischen Haltevorrichtung (52) befestigt ist, die so angeordnet sind, dass ein Luftspalt zwischen der Lichtquelle (2) und dem Lichtleiter (3) gebildet wird.

15. Lampe, Leuchte oder ein Beleuchtungskörper, umfassend eine lichtemittierende Vorrichtung (1) gemäß einem der vorstehenden Ansprüche.

## Revendications

1. Dispositif électroluminescent (1) comprenant :
une source de lumière (2) adaptée pour, en fonctionnement, émettre de la lumière, la source de lumière (2) comprenant une surface électroluminescente (21), et
un guide de lumière (3) comprenant une surface supérieure (31), une surface inférieure (32) et un bord de couplage entrant de lumière (33) s'étendant entre la surface supérieure (31) et la surface inférieure (32), dans lequel
un plan (4) est défini comme s'étendant parallèlement à au moins l'une de la surface supérieure (31) et de la surface inférieure (32) du guide de lumière (3), dans lequel
la source de lumière (2) et le guide de lumière (3) sont agencés l'un par rapport à l'autre d'une manière telle que la surface électroluminescente (21) de la source de lumière (2) et le bord de couplage entrant de lumière (33) du guide de lumière (3) se font face, que le bord de couplage entrant de lumière (33) du guide de lumière (3) s'étend selon un premier angle (α) par rapport audit plan (4), que la surface électroluminescente (21) de la source de lumière (2) s'étend selon un second angle (β) par rapport audit plan (4) et qu'au moins l'un du premier angle (α) et du second angle (β) est inférieur à 90°, dans lequel
le dispositif électroluminescent (1) comprend en outre un élément optique linéaire réfringent et/ou réfléchissant (6) agencé et adapté pour mettre en forme la fraction de la lumière émise par la source de lumière (2) qui n'est pas couplée dans le guide de lumière (3) et/ou qui s'échappe de la surface supérieure (31) du guide de lumière (3),
**caractérisé en ce que** l'élément optique linéaire réfringent et/ou réfléchissant (6) est agencé et adapté pour mettre en forme ladite fraction de la lumière émise par la source de lumière (2) en un faisceau de lumière focalisé se propageant au-dessus de la surface supérieure (31) à distance du guide de lumière (3) selon un angle aigu avec ledit plan (4).

2. Dispositif électroluminescent (1) selon la revendication 1, et comprenant en outre un élément de plaque réfléchissante (7) agencé au niveau d'un côté supérieur du guide de lumière (3) et adapté pour rediriger dans un sens vers le bas et focaliser la fraction de la lumière émise par la source de lumière (2) et couplée en sortie du guide de lumière (2) et/ou s'échappant de la surface supérieure (31) du guide de lumière (3) à travers la surface supérieure (31) du guide de lumière (3).

3. Dispositif électroluminescent (1) selon l'une quelconque des revendications précédentes, dans lequel l'épaisseur (t) du guide de lumière (3) est plus petite que la largeur (w) de la surface électroluminescente (33) de la source de lumière (2).

4. Dispositif électroluminescent (1) selon la revendication 3, dans lequel le premier angle (α) est égal à 90°.

5. Dispositif électroluminescent (1) selon l'une quelconque des revendications 3 et 4 précédentes, dans lequel l'épaisseur (t) du guide de lumière (3) est de 2,2 mm, et dans lequel la largeur (w) de la surface électroluminescente (21) de la source de lumière (2) est de 3 mm.

6. Dispositif électroluminescent (1) selon l'une quelconque des revendications précédentes, et comprenant en outre des éléments optiques ou des points (8) agencés et adaptés pour coupler de la lumière en sortie du guide de lumière (3) dans un sens vers la surface inférieure (32).

7. Dispositif électroluminescent (1) selon l'une quelconque des revendications précédentes, et comprenant en outre un réflecteur, un réflecteur diffus (91, 92), un élément optique réfléchissant ou un élément optique rétroréfléchissant (93) agencés et adaptés pour rediriger au moins une partie de la fraction de la lumière émise par la source de lumière (2) et couplée en sortie du guide de lumière (3) à travers la surface supérieure (31) du guide de lumière (3) dans un sens de retour vers la source de lumière (2).

8. Dispositif électroluminescent (1) selon l'une quelconque des revendications précédentes, et comprenant en outre des éléments de couplage en sortie de lumière (11) agencés au niveau de ou dans la surface supérieure (31) du guide de lumière (3) au niveau de ou adjacent au bord de couplage entrant de lumière (33) du guide de lumière (3).

9. Dispositif électroluminescent (1) selon l'une quelconque des revendications précédentes, dans lequel la surface électroluminescente (21) de la source de lumière (2) est inclinée par rapport audit plan (4).

10. Dispositif électroluminescent (1) selon la revendication 9, dans lequel le bord de couplage entrant de lumière (33) du guide de lumière (3) est incliné par rapport audit plan (4).

11. Dispositif électroluminescent (1) selon l'une quelconque des revendications précédentes, dans lequel le premier angle (α) est différent du second angle (β).

12. Dispositif électroluminescent (1) selon l'une quelconque des revendications précédentes, dans lequel le premier angle (α) se situe dans l'intervalle de 90° ≥ α ≥ 0°, ou dans l'intervalle de 90° ≥ α ≥ 45°.

13. Dispositif électroluminescent (1) selon l'une quelconque des revendications précédentes, dans lequel le second angle (β) se situe dans l'intervalle de 90° > β ≥ 0°, ou dans l'intervalle de 90° > β ≥ 45°.

14. Dispositif électroluminescent (1) selon l'une quelconque des revendications précédentes, dans lequel la source de lumière (2) est montée sur le bord de couplage entrant de lumière (33) du guide de lumière (3) au moyen d'un ou plusieurs quelconques parmi une soudure optiquement transparente (51), une colle optiquement transparente, un dispositif de maintien mécanique (52) et un dispositif de maintien mécanique (52) agencé de telle sorte qu'un espace d'air est formé entre la source de lumière (2) et le guide de lumière (3).

15. Lampe, luminaire ou appareil d'éclairage, comprenant un dispositif électroluminescent (1) selon l'une quelconque des revendications précédentes.
